# EUROPEAN PATENT SPECIFICATION

(11) **EP 3 434 438 B1**
(45) Date of publication and mention of the grant of the patent: **17.08.2022**
(21) Application number: 17770463.2
(22) Date of filing: 27.03.2017
(51) Int. Cl.: B29C 45/76

(54) **INJECTION MOLDING MACHINE**
SPRITZGIESSMASCHINE
MACHINE DE MOULAGE PAR INJECTION

(30) Priority: 25.03.2016 JP 2016062414
(43) Date of publication of application: 30.01.2019
(73) Proprietor: Sumitomo Heavy Industries, Ltd., Tokyo 141-6025 (JP)
(72) Inventor: SHIBATA, Tatsuya, Chiba-shi, Chiba 263-0001 (JP); TANAKA, Yoshitada, Chiba-shi, Chiba 263-0001 (JP)
(74) Representative: Louis Pöhlau Lohrentz
(86) International application number: PCT/JP2017/012490
(87) International publication number: WO 2017/164424

(56) References cited:
- EP-A1- 0 591 983
- JP-A- H0 497 813
- JP-A- H06 114 897
- JP-A- H06 297 516
- JP-A- 2003 039 516
- JP-A- 2004 106 279
- JP-A- 2004 106 279
- JP-A- 2008 290 415
- JP-A- 2011 136 512
- US-A1- 2004 026 810
- US-A1- 2004 051 194
- US-A1- 2005 082 708
- US-A1- 2008 299 242

## Description

### Technical Field

The present invention relates to an injection molding machine.

### Background Art

An ejector unit of an injection molding machine disclosed in PTL 1 includes driving means for driving an operation member to cause a molding product to protrude. The driving means generates a large protrusion force using a large-diameter cylinder at the beginning of the protrusion and causes the molding product to protrude at a high speed using a small-diameter cylinder after the molding product is separated from a core. Accordingly, a molding cycle can be shortened. PTL 2 discloses a method of detecting a malfunction during the step of ejecting a molded product out of dies in an electric or hydraulic inj ection-molding machine. PTL 3 discloses a molding machine such as an injection molding machine and a die casting machine with improved safety in a mold opening operation and an ejection operation. PTL 4 discloses a method of ejecting an ejector pin. PTL 5 discloses a monitoring method carried out when a molded product is ejected from a die in an injection molding machine. PTL 6 discloses a method of detecting malfunctions during an ejecting step of removing molded products from a mold in a motorized or hydraulic injection molding machine. PTL 7 discloses an injection molding machine, and a method for controlling an ejection therein. PTL 8 discloses a control device of an ejector apparatus of an injection molding machine for dropping a molding product from a mold. PTL 9 discloses an injection molding machine having a molded article ejector in which an advancing stroke of an ejector rod can be set.

### Citation List

### Patent Literature

[PTL 1] Japanese Unexamined Patent Application Publication No. 7-214610
[PTL 2] US Patent Publication No. 2004/051194
[PTL 3] Japanese Unexamined Patent Application Publication No. 2003-039516
[PTL 4] Japanese Unexamined Patent Application Publication No. 2004-106279
[PTL 5] US Patent Publication No. 2005/082708
[PTL 6] US Patent Publication No. 2004/026810
[PTL 7] EP Patent Publication No. 0591983
[PTL 8] Japanese Unexamined Patent Application Publication No. 2011-136512
[PTL 9] US Patent Publication No. 2008/299242

### Summary of Invention

### Technical Problem

An injection molding machine includes a movable member such as an ejector rod, a drive source which moves a movable member forward or rearward, and a controller which controls the drive source. The controller controls the drive source based on a detection value of a forward movement speed of the movable member and a set value of the forward movement speed.

In order to protect the injection molding machine, a mold unit, a molding product, or the like, when the molding product protrudes, restriction with respect to a driving force of the drive source may be set.

In the related art, when the driving force is restricted, the forward movement speed of the movable member is restricted, and thus, a protrusion time is long.

The present invention is made in consideration of the above-described problems, and a main object thereof is to provide an injection molding machine capable of achieving both protection of the injection molding machine, the mold unit, or the molding product, and shortening of the protrusion time. Solution to Problem

In order to achieve the above-described object, according to an aspect of the present invention, there is provided an injection molding machine according to claim 1.

### Advantageous Effects of Invention

According to the aspect of the present invention, an injection molding machine capable of achieving both protection of the injection molding machine, the mold unit, or the molding product, and shortening of the protrusion time is provided.

### Brief Description of Drawings

FIG. 1 is a view showing a state when mold opening of an injection molding machine according to an embodiment is completed and is a view showing a state when a forward movement of an ejector rod starts.
FIG. 2 is a view showing a state when the mold opening of the injection molding machine according to the embodiment is completed and is a view showing a state when the forward movement of the ejector rod is completed.
FIG. 3 is a view showing a state when a mold of the injection molding machine according to the embodiment is clamped.
FIG. 4 is a view showing a comparison between temporal changes of a forward movement speed and a position of the ejector rod according to the embodiment and temporal changes of a forward movement speed and a position of an ejector rod in the related art.

### Description of Embodiments

Hereinafter, an embodiment will be described with reference to the drawings. The same or corresponding reference numerals are assigned to the same or corresponding constituent elements in each drawing, and descriptions thereof are omitted.

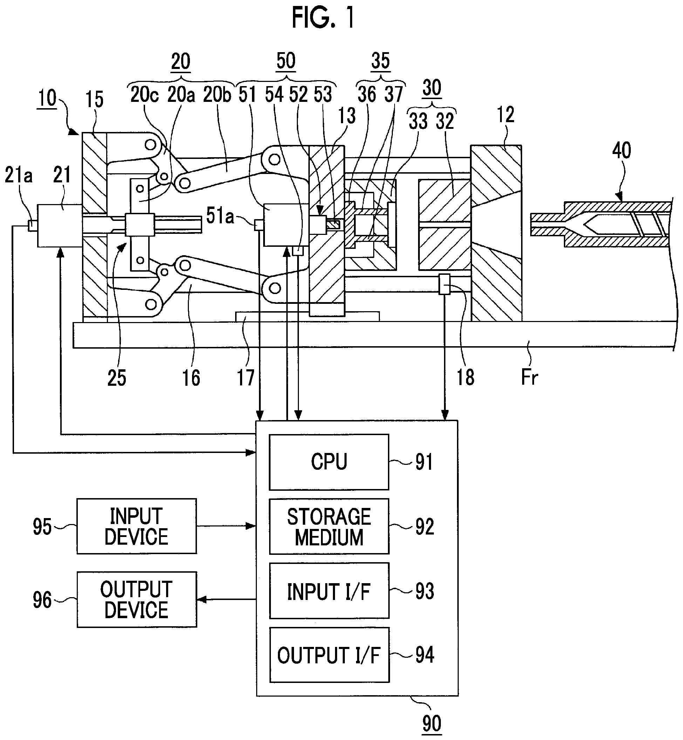

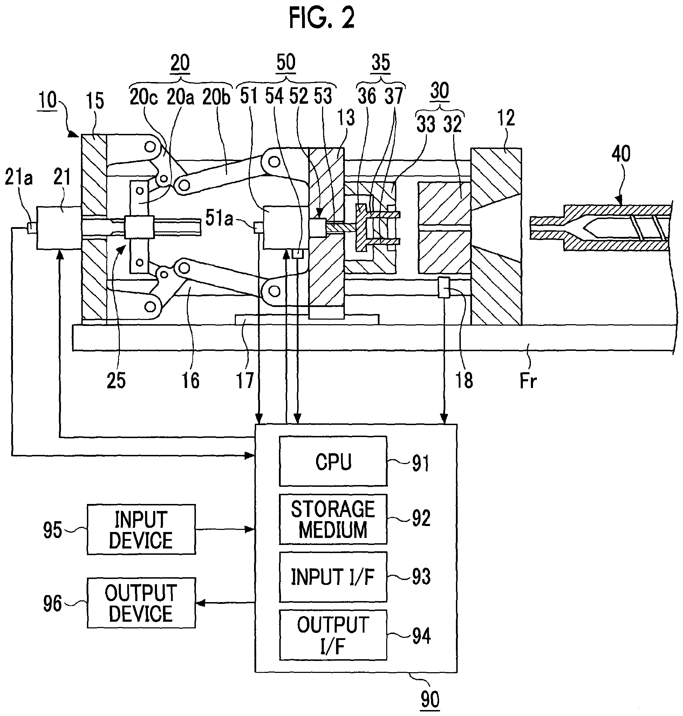

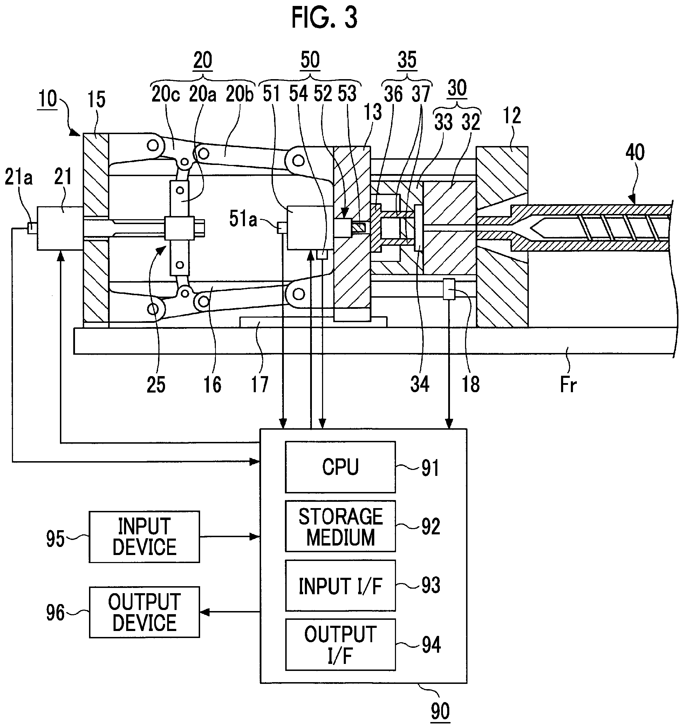

FIG. 1 is a view showing a state when mold opening of an injection molding machine according to an embodiment is completed and is a view showing a state when a forward movement of an ejector rod starts. FIG. 2 is a view showing a state when the mold opening of the injection molding machine according to the embodiment is completed and is a view showing a state when the forward movement of the ejector rod is completed. FIG. 3 is a view showing a state when a mold of the injection molding machine according to the embodiment is clamped. As shown in FIGS . 1 to 3, the injection molding machine includes a frame Fr, a mold clamping unit 10, an injection unit 40, an ejector unit 50, a controller 90, an input unit 95, and an output unit 96.

In the following descriptions, a movement direction (a right direction in FIGS. 1 to 3) of a movable platen 13 when a mold is closed is referred to a front side, and a movement direction (a left direction in FIGS. 1 to 3) of the movable platen 13 when the mold is opened is referred to a rear side.

The mold clamping unit 10 performs closing, clamping, and opening of the mold unit 30. For example, the mold clamping unit 10 is a horizontal type mold clamping unit in which the mold opening and closing directions are the horizontal direction. The mold clamping unit 10 includes a stationary platen 12, a movable platen 13, a toggle support 15, a tie bar 16, a toggle mechanism 20, a mold clamping motor 21, and a motion conversion mechanism 25.

The stationary platen 12 is fixed to the frame Fr. A stationary mold 32 is attached to a surface of the stationary platen 12 facing the movable platen 13.

The movable platen 13 is movable along a guide (for example, a guide rail) 17 placed on the frame Fr and is movable forward or rearward with respect to the stationary platen 12. A movable mold 33 is attached to a surface of the movable platen 13 facing the stationary platen 12.

The movable platen 13 moves forward or rearward with respect to the stationary platen 12, and thus, mold closing, mold clamping, and, mold opening are performed. The mold unit 30 is configured of the stationary mold 32 and the movable mold 33.

The toggle support 15 is connected to the stationary platen 12 at an interval, and is placed on the frame Fr to be movable in the mold opening and closing directions. In addition, the toggle support 15 may be movable along a guide which is placed on the frame Fr. The guide of the toggle support 15 may be also used as the guide 17 of the movable platen 13.

Moreover, in the present embodiment, the stationary platen 12 is fixed to the frame Fr, and the toggle support 15 is movable in the mold opening and closing directions with respect to the frame Fr. However, the toggle support 15 may be fixed to the frame Fr, and the stationary platen 12 may be movable in the mold opening and closing directions with respect to the frame Fr.

The stationary platen 12 and the toggle support 15 are connected to each other at an interval by the tie bar 16. A plurality of tie bars 16 may be used. The tie bars 16 are parallel in the mold opening and closing directions and extend according to a mold clamping force. A mold clamping force detector 18 is provided in at least one tie bar 16. The mold clamping force detector 18 detects strain of the tie bar 16 to detect the mold clamping force and sends a signal indicating a detection result to the controller 90.

In addition, the mold clamping force detector 18 is not limited to a strain gauge type detector, and may be a piezoelectric type detector, a capacitance type detector, a hydraulic type detector, an electromagnetic type detector, or the like, and the attachment position of the mold clamping force detector is also not limited to the tie bar 16.

The toggle mechanism 20 moves the movable platen 13 with respect to the stationary platen 12. The toggle mechanism 20 is disposed between the movable platen 13 and the toggle support 15. The toggle mechanism 20 is configured of a crosshead 20a, a pair of link groups, or the like. Each link group includes a plurality of links 20b and 20c which are bendably/strechably connected to each other by pins or the like. One link 20b is oscillatingly attached to the movable platen 13, and the other link 20c is oscillatingly attached to the toggle support 15. If the crosshead 20a moves forward or rearward, the plurality of links 20b and 20c are bent and stretched and the movable platen 13 moves forward or rearward with respect to the toggle support 15.

The mold clamping motor 21 is attached to the toggle support 15 and operates the toggle mechanism 20. The mold clamping motor 21 moves the crosshead 20a forward or rearward, and thus, the links 20b and 20c are bent and stretched, and the movable platen 13 moves forward or rearward.

The motion conversion mechanism 25 converts a rotary motion of the mold clamping motor 21 into a linear motion and transmits the linear motion to the crosshead 20a. For example, the motion conversion mechanism 25 is configured of a ball screw mechanism or the like.

The operation of the mold clamping unit 10 is controlled by the controller 90. The controller 90 controls a mold closing process, a mold clamping process, a mold opening process, or the like.

In the mold closing process, the mold clamping motor 21 is driven to move the crosshead 20a forward at a set speed. Accordingly, the movable platen 13 moves forward and the movable mold 33 comes into contact with the stationary mold 32. For example, a position or speed of the crosshead 20a is detected using an encoder 21a of the mold clamping motor 21 or the like. The encoder 21a detects the rotation of the mold clamping motor 21 and sends a signal indicating the detection results to the controller 90.

In the mold clamping process, the mold clamping motor 21 is further driven to further move the crosshead 20a forward to a set position, and thus, a mold clamping force is generated. When the mold is clamped, a cavity space 34 is formed between the movable mold 33 and the stationary mold 32, and the cavity space 34 is filled with a liquid molding material by the injection unit 40. A filled molding material is solidified, and thus, a molding product is obtained. A plurality of cavity spaces 34 may be provided, and in this case, a plurality of molding products may be simultaneously obtained.

In the mold opening process, the mold clamping motor 21 is driven to move the crosshead 20a rearward at a set speed. Accordingly, the movable platen 13 moves rearward, and the movable mold 33 is separated from the stationary mold 32. Thereafter, the ejector unit 50 causes the molding product to protrude from the movable mold 33.

In addition, the mold clamping unit 10 of the present embodiment includes a mold clamping motor 21 as a drive source. However, the mold clamping unit 10 may have a hydraulic cylinder instead of the mold clamping motor 21. In addition, the mold clamping unit 10 has a linear motor for opening and closing a mold and may have an electromagnet to clamp the mold.

In addition, the mold clamping unit 10 of the present embodiment is a horizontal type mold clamping unit in which the mold opening and closing directions are a horizontal direction. However, the mold clamping unit may be a vertical type mold clamping unit in which the mold opening and closing directions are a vertical direction.

The ejector unit 50 causes the molding product to protrude from the mold unit 30. The ejector unit 50 includes an ejector motor 51, a motion conversion mechanism 52, and an ejector rod 53.

The ejector motor 51 is attached to the movable platen 13. The ejector motor 51 is directly connected to the motion conversion mechanism 52. However, the ejector motor 51 may be connected to the motion conversion mechanism 52 via a belt, a pulley, or the like.

The motion conversion mechanism 52 converts a rotary motion of the ejector motor 51 into a linear motion of the ejector rod 53. For example, the motion conversion mechanism 52 is configured of a ball screw mechanism or the like.

The ejector rod 53 is movable forward or rearward in a through-hole of the movable platen 13. A front end portion of the ejector rod 53 come into contact with a force transmission member 35 which is disposed to be movable forward or rearward inside the movable mold 33.

An operation of the ejector unit 50 is controlled by the controller 90. The controller 90 controls a protrusion process or the like.

In the protrusion process, the ejector motor 51 is driven to move the ejector rod 53 forward at a set speed, the force transmission member 35 moves forward, and thus, the molding product protrudes. Thereafter, the ejector motor 51 is driven to move the ejector rod 53 rearward at a set speed, and thus, the force transmission member 35 moves rearward to an original position. For example, a position or speed of the ejector rod 53 is detected using an encoder 51a of the ejector motor 51. The encoder 51a detects the rotation of the ejector motor 51 and sends a signal indicating the detection result to the controller 90.

For example, the force transmission member 35 includes a plate-shaped ejector plate 36 perpendicular to a front-rear direction and rod-shaped ejector pins 37 which extend forward from the ejector plate 36.

The ejector plate 36 is pressed forward by the ejector rod 53 which is disposed behind the ejector plate 36. In addition, the ejector plate 36 is pressed rearward by a spring (not shown) which is disposed in front of the ejector plate 36.

The ejector pins 37 extend forward from the ejector plate 36 and penetrate the movable mold 33. As shown in FIG. 3, front end surface of the ejector pins 37 becomes a portion of a wall surface of the cavity space 34. The ejector pin 37 moves forward or rearward together with the ejector plate 36, and performs the protrusion of the molding product.

After the mold opening of the mold unit 30, the controller 90 moves the ejector rod 53 forward from a standby position shown in FIG. 1 to a protrusion position shown in FIG. 2. Accordingly, the ejector plate 36 and the ejector pins 37 are moved forward, and the ejector pins 37 cause the molding product to protrude from the movable mold 33.

Thereafter, the controller 90 moves the ejector rod 53 rearward to the standby position shown in FIG. 1. Meanwhile, the ejector plate 36 moves rearward while being pressed against the ejector rod 53 by an elastic restoring force of the spring.

Before the ejector rod 53 is returned to the standby position shown in FIG. 1, the ejector plate 36 is stopped by a stopper and is away from the ejector rod 53. The ejector rod 53 returned to the standby position is away from the ejector plate 36.

As shown in FIGS. 1 to 3, the controller 90 includes a Central Processing Unit (CPU) 91, a storage medium 92 such as a memory, an input interface 93, and an output interface 94. The controller 90 performs various controls by causing the CPU 91 to execute a program stored in the storage medium 92. In addition, the controller 90 receives a signal from the outside through the input interface 93 and transmits a signal to the outside through the output interface 94.

The input unit 95 receives an input operation by a user and transmits an operation signal corresponding to the input operation by the user to the controller 90. As the input unit 95, for example, a touch panel is used. The touch panel also serves as the output unit 96 to be described later.

Under the control of the controller 90, the output unit 96 displays an operation screen corresponding to the input operation of the input unit 95. A plurality of operation screens are prepared and are switching-displayed or superimposition-displayed.

The user sets the mold clamping unit 10, the injection unit 40, the ejector unit 50, or the like by operating the input unit 95 while watching the operation screen displayed by the output unit 96. The setting is stored in storage medium 92 and read out as necessary.

The controller 90 controls the ejector motor 51 based on a detection value of a forward movement speed of the ejector rod 53 and a set value of the forward movement speed. For example, the controller 90 feedback-controls the ejector motor 51 such that the detection value becomes the set value. As the feedback control, for example, a PI control, a PID control, or the like is used. In the PI control and the PID control, the ejector motor 51 is controlled based on a deviation between the detection value and the set value.

In order to protect the injection molding machine, the mold unit 30, and the molding product, when the ejector rod 53 moves forward, restriction with respect to a driving force of the ejector motor 51 may be set. In this case, the forward movement speed of the ejector rod 53 is restricted.

For example, the driving force of the ejector motor 51 is detected by a torque detector 54. For example, the torque detector 54 detects a current of the ejector motor 51 to detect torque of the ejector motor 51, and sends a signal indicating the detection result to the controller 90. The controller 90 controls the ejector motor 51 such that the detection value of the driving force does not exceed an upper limit value of the driving force while monitoring the detection value of the driving force.

For example, the upper limit value of the driving force indicates a ratio (%) of the driving force with respect to a rated value. The upper limit value of the driving force in a case where the restriction with respect to the driving force is not set is 100%. Meanwhile, the upper limit value of the driving force in a case where the restriction with respect to the driving force is set is a value smaller than 100%. The value is input to the input unit 95 and is stored in the storage medium 92. In addition, in the present embodiment, the rated value is used as a reference value of the driving force. However, the reference value is not limited to the rated value.

While the controller 90 moves the ejector rod 53 forward, the controller 90 sets a first section and a second section having different upper limit values of the driving force. The first section and the second section are sections adjacent to each other, and are distinguished by a forward movement distance, an elapsed time, or the like of the ejector rod 53. In addition, a third section may be further set. The number of sections may be four or more.

The upper limit value of the driving force of the first section is larger than the upper limit value of the driving force of the second section. For example, the upper limit value of the driving force of the first section may be 100%, and the restriction with respect to the driving force may be not set. Accordingly, in the first section, the ejector rod 53 can rapidly move forward.

Meanwhile, the upper limit value of the driving force of the second section is smaller than the upper limit value of the driving force of the first section. The upper limit value of the driving force of the second section is smaller than 100%, and the restriction with respect to the driving force is set. Accordingly, in the second section, the injection molding machine, the mold unit 30, the molding product, or the like can be protected.

The first section gives priority to a speed, and second section gives priority to protection. Accordingly, by using the first section and the second section differently, it is possible to achieve both shortening of the protrusion time and the protection. Hereinafter, a specific use or the like will be described.

As shown in FIG. 1, when the ejector rod 53 starts the forward movement, the ejector rod 53 is away from the force transmission member 35 without coming into contact with the force transmission member 35. The ejector rod 53 comes into contact with the force transmission member 35 in the middle of the forward movement, and continuously, presses the force transmission member 35 and causes the molding product to protrude shown in FIG. 2. Hereinafter, a section where the ejector rod 53 is away from the force transmission member 35 is referred to an idle running section.

In the idle running section, a resistance does not act on the ejector rod 53 from the force transmission member 35. In addition, in the idle running section, a force is not applied to the force transmission member 35 or the molding product. Accordingly, in the idle running section, it is not necessary to protect the injection molding machine, the mold unit 30, or the molding product.

For example, the first section includes at least a portion of the idle running section. Meanwhile, the second section includes at least a portion of the section where the ejector rod 53 is in contact with the force transmission member 35. The second section may further include a portion of the idle running section, and may start slight before an end point of the idle running section. When the ejector rod 53 starts to press the force transmission member 35, the largest resistance tends to be applied.

The idle running section is obtained from a structure of the mold unit 30 or the like, and the idle running section stored in the storage medium 92 for each mold unit 30 is read and used. As described later, the idle running section can be obtained from the detection value of the driving force or the like.

In an unclaimed aspect, the controller 90 may set the first section and the second section based on a difference between the detection value and a predetermined value of the driving force. Here, for example, as the predetermined value, a detection value (hereinafter, referred to as a reference actual value) of the driving force of the ejector motor 51 when the ejector rod 53 move forward in a state where the molding product is not present inside the mold unit 30.

The reference actual value is stored in the storage medium 92 in association with the forward movement distance or the elapsed time of the ejector rod 53. The reference actual value may be measured when the mold unit 30 is replaced. As described above, the reference actual value is measured in the state where the molding product is not present inside the mold unit 30, and thus, the measurement is performed in a state where the resistance from the molding product does not act.

If the ejector rod 53 comes into contact with the force transmission member 35 in a state where the molding product is present inside the mold unit 30, the resistance acts on the ejector rod from the molding product via the force transmission member 35, and thus, the detection value of the driving force is larger than the reference actual value. Accordingly, the end point of the idle running section can be determined depending on the difference between the detection value and the reference actual value exceeds a threshold.

In addition, the controller 90 may set the first section and the second section based on a rising rate of the detection value of the driving force. If the ejector rod 53 comes into contact with the force transmission member 35, the resistance acts on the ejector rod 53 from the force transmission member 35. Accordingly, a decrease in the forward movement speed by the resistance is suppressed, and thus, the detection value of the driving force sharply increases. Accordingly, the end point of the idle running section is determined depending on whether or not the rising rate of the detection value of the driving force exceeds the threshold.

In addition, when the ejector rod 53 accelerates, the detection value of the driving force sharply increases. This data is data which does not relate to the end point of the idle running section, and thus, this data may not be used to detect the end point of the idle running section.

In addition, in an unclaimed aspect, the controller 90 may set the first section and the second section based on the detection value of the forward movement speed of the ejector rod 53. If the detection value of the forward movement speed reaches a sufficient speed and acceleration is approximately finished, there is a margin in the driving force. Therefore, even when the restriction with respect to the driving force is set, the detection value of the forward movement speed hardly decreases. Accordingly, the first section and the second section may be distinguished depending on whether or not the detection value of the forward movement speed is equal to or less than the predetermined value. During the acceleration, the restriction with respect to the driving force may not be set.

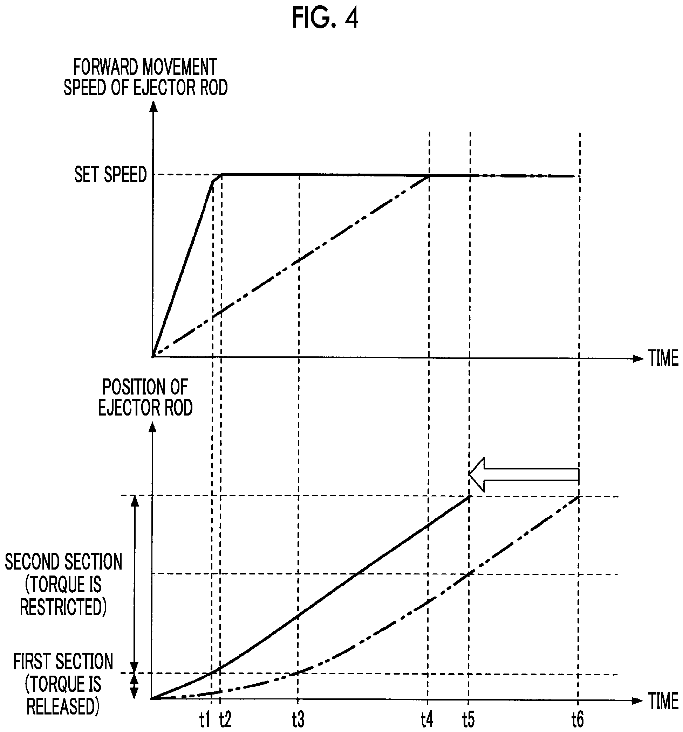

FIG. 4 is a view showing a comparison between temporal changes of the forward movement speed and the position of the ejector rod according to the embodiment and temporal changes of a forward movement speed and a position of an ejector rod in the related art. In FIG. 4, solid lines indicate the temporal changes of the forward movement speed and the position of the ejector rod according to the embodiment, and two-dot chain lines indicate temporal changes of the forward movement speed and the position of the ejector rod in the related art.

As shown by the two-dot chain lines in FIG. 4, in the related art, in the first section, the forward movement speed of the ejector rod 53 increases with acceleration according to an upper limit value of torque over time. In addition, in the second section following the first section, the forward movement speed of the ejector rod 53 increases with the acceleration corresponding to the upper limit value of the torque over time. After the forward movement speed of the ejector rod 53 reaches a set speed in the middle (time t4) of the second section, the forward movement speed is maintained at the set speed.

Meanwhile, as shown by the solid lines in FIG. 4, in the embodiment, in the first section, the forward movement speed of the ejector rod 53 increases with acceleration corresponding to an upper limit value of torque over time. In addition, in the second section following the first section, the forward movement speed of the ejector rod 53 increases with the acceleration corresponding to the upper limit value of the torque over time. After the forward movement speed of the ejector rod 53 reaches a set speed in the middle (time t2) of the second section, the forward movement speed is maintained at the set speed.

In addition, as shown by the two-dot chain lines in FIG. 4, in the related art, in the first section, the position of the ejector rod 53 is displaced forward at the forward movement speed corresponding to the upper limit value of the torque over time, and reaches the end point of the first section at a time t3. In addition, in the second section following the first section, the position of the ejector rod 53 is displaced forward at the forward movement speed corresponding to the upper limit value of the torque over time. The position of the ejector rod 53 is displaced forward at the set speed from the middle (time t4) of the second section and reaches the end point of the second section at a time t6.

Meanwhile, as shown by the solid lines in FIG. 4, in the embodiment, in the first section, the position of the ejector rod 53 is displaced forward at the forward movement speed corresponding to the upper limit value of the torque over time, and reaches the end point of the first section at a time t1. In addition, in the second section following the first section, the position of the ejector rod 53 is displaced forward at the forward movement speed corresponding to the upper limit value of the torque over time. The position of the ejector rod 53 is displaced forward at the set speed from the middle (time t2) of the second section and reaches the end point of the second section at a time t5.

In FIG. 4, in the related art, in both the first section and the second section, the upper limit value of the driving force is set to be less than the 100%, and the torque is restricted. Meanwhile, in the present embodiment, in the first section, the upper limit value of the driving force is set to 100% and the torque is released. In the second section, the upper limit value of the driving force is set to be less than 100%, and the torque is restricted. In the second section, the upper limit values of the torque in the embodiment and the related art are the same as each other. However, in the first section, the upper limit values of the torque in the embodiment and the related art are different from each other.

Unlike the related art, in the embodiment, in the first section, the upper limit value of the driving force is set to 100%, and the torque is released. In the first section, the ejector rod 53 is separated from the force transmission member 35, and thus, the resistance does not act the ejector rod 53 from the force transmission member 35, and a force does not act on the force transmission member 35 or the molding product from the ejector rod 53. Accordingly, in the first section, even when the torque is not restricted, a risk of damaging the injection molding machine, the mold unit, or the molding product is low, and thus, the torque is released.

In the first section, the upper limit value of the torque of the embodiment is larger than that of the related art, and thus, in the first section, the acceleration of the forward movement speed of the ejector rod 53 of the embodiment is larger than that of the related art. As a result, compared to the related art, in the embodiment, the ejector rod 53 can pass through the first section at a shorter time (t1 < t3). Accordingly, a time until the ejector rod 53 reaches the end point of the second section is shorter (t5 < t6). Moreover, in the embodiment, in the second section, the ejector rod 53 moves forward while the torque is restricted. Therefore, as shown by an arrow in FIG. 4, according to the embodiment, it is possible to achieve both the shortening of the protrusion time and the protection of the injection molding machine, the mold unit, or the molding product.

Hereinbefore, the embodiment or the like of the injection molding machine is described. However, the present invention is not limited to the above-described embodiments or the like, and various modifications and improvements are possible within the scope of the appended claims.

In the embodiment, the ejector rod 53 corresponds to a movable member described in claims. However, the present invention is not limited to this. The movable member may be any one as long as it is a member which moves forward or rearward together with the ejector rod 53.

In the embodiment, the ejector motor 51 corresponds to a drive source described in claims. However, the present invention is not limited to this. For example, a hydraulic cylinder or the like may be used as the drive source.

A detector for detecting the driving force of the drive source may be appropriately selected according to the drive source. For example, in a case where the drive source is the hydraulic cylinder, a hydraulic detector may be used. In addition, a strain detector which detects strain of the ejector rod 53 may be used regardless of a type of the drive source.

In the embodiment, a horizontal mold clamping unit in which the mold opening and closing directions are the horizontal direction is used as the mold clamping unit 10. However, the mold clamping unit 10, a vertical mold clamping unit in which the mold opening and closing directions are the up-down direction may be used. The vertical mold clamping unit includes a lower platen, an upper platen, a toggle support, a toggle mechanism, a tie bar, or the like. Either the lower platen or the upper platen is used as the stationary platen, and the other is used as the movable platen. A lower mold is attached to the lower platen, and an upper mold is attached to the upper platen. The mold unit is configured of the lower mold and the upper mold. The lower mold may be attached to the lower platen via a rotary table. The toggle support is disposed below the lower platen. The toggle mechanism is disposed between the toggle support and the lower platen. The tie bar is parallel in a vertical direction, penetrates the lower platen, and connects the upper platen and the toggle support to each other. The ejector unit is attached to a surface of the lower platen facing the toggle support.

Priority is claimed to Japanese Patent Application No. 2016-062414, filed March 25, 2016.

### Reference Signs List

- 10:: mold clamping unit
- 30:: mold unit
- 32:: stationary mold
- 33:: movable mold
- 34:: cavity space
- 35:: force transmission member
- 50:: ejector unit
- 51:: ejector motor
- 52:: motion conversion mechanism
- 53:: ejector rod
- 54:: torque detector
- 90:: controller
- 95:: input unit
- 96:: output unit

## Claims

1. An injection molding machine (10) comprising:
a movable member (53) which moves forward with respect to a mold unit (30) so as to cause a molding product to protrude from the mold unit (30);
a drive source (51) which moves the movable member (53) forward or rearward; and
a controller (90) which controls the drive source (51),
**characterized in that** the controller (90) is configured to set a first section and a second section based on a rising rate of a detection value of a driving force of the drive source to have different upper limit values of the driving force of the drive source (51) while the controller (90) moves the movable member (53) forward, and to control the drive source (51) such that the driving force does not exceed the upper limit values.

2. The injection molding machine (10) according to claim 1,
wherein the movable member (53) is away from a force transmission member (35) which is disposed inside the mold unit (30) to be movable forward or rearward when a forward movement starts, comes into contact with the force transmission member (35) in the middle of the forward movement, and subsequently presses the force transmission member (35) to protrude the molding product,
wherein the first section includes a part or an entirety of a section in which the movable member (53) is away from the force transmission member (35),
wherein the second section includes a part or an entirety of a section in which the movable member (53) comes into contact with the force transmission member (35), and
wherein the upper limit value of the first section is larger than the upper limit value of the second section.

## Patentansprüche

1. Spritzgießmaschine (10), umfassend:
ein bewegliches Element (53), welches sich in Bezug auf eine Formeinheit (30) nach vorne bewegt, um zu bewirken, dass ein Formprodukt von der Formeinheit (30) vorsteht;
eine Antriebsquelle (51), welche das bewegliche Element (53) nach vorne oder hinten bewegt; und
eine Steuerung (90), welche die Antriebsquelle (51) steuert,
**dadurch gekennzeichnet, dass** die Steuerung (90) konfiguriert ist, einen ersten Abschnitt und einen zweiten Abschnitt basierend auf einer Anstiegsrate eines Detektionswerts einer Antriebskraft der Antriebsquelle derart einzustellen, dass sie unterschiedliche obere Grenzwerte der Antriebskraft der Antriebsquelle (51) aufweisen, während die Steuerung (90) das bewegliche Element (53) nach vorne bewegt, und um die Antriebsquelle (51) derart zu steuern, dass die Antriebskraft die oberen Grenzwerte nicht überschreitet.

2. Spritzgießmaschine (10) nach Anspruch 1,
wobei das bewegliche Element (53) von einem Kraftübertragungselement (35) entfernt ist, welches innerhalb der Formeinheit (30) angeordnet ist, um nach vorne oder hinten beweglich zu sein, wenn eine Vorwärtsbewegung beginnt, mit dem Kraftübertragungselement (35) in der Mitte der Vorwärtsbewegung in Kontakt kommt und anschließend das Kraftübertragungselement (35) drückt, um das Formprodukt hervorstehen zu lassen,
wobei der erste Abschnitt einen Teil oder ein Ganzes eines Abschnitts aufweist, in welchem das bewegliche Element (53) von dem Kraftübertragungselement (35) entfernt ist,
wobei der zweite Abschnitt einen Teil oder ein Ganzes eines Abschnitts aufweist, in welchem das bewegliche Element (53) mit dem Kraftübertragungselement (35) in Kontakt kommt, und
wobei der obere Grenzwert des ersten Abschnitts größer als der obere Grenzwert des zweiten Abschnitts ist.

## Revendications

1. Une machine de moulage par injection (10) comprenant :
un élément mobile (53) qui se déplace en marche avant par rapport à une unité de moule (30) de sorte qu'un produit de moulage dépasse de l'unité de moule (30) ;
une source d'entraînement (51) qui déplace l'élément mobile (53) en marche avant ou en marche arrière ; et
un contrôleur (90) qui contrôle la source d'entraînement (51),
**caractérisée en ce que** le contrôleur (90) est configuré pour régler une première section et une seconde section sur la base d'une vitesse d'augmentation d'une valeur de détection d'une force d'entraînement de la source d'entraînement afin d'avoir des valeurs limites supérieures différentes pour la force d'entraînement de la source d'entraînement (51) pendant que le contrôleur (90) déplace l'élément mobile (53) en marche avant, et pour contrôler la source d'entraînement (51) de sorte que la force d'entraînement ne dépasse pas les valeurs limites supérieures.

2. La machine de moulage par injection (10) selon la revendication 1, dans laquelle l'élément mobile (53) est éloigné d'un élément de transmission de force (35) qui est disposé à l'intérieur de l'unité de moule (30) pour pouvoir se déplacer en marche avant ou en marche arrière lorsqu'un mouvement de marche avant débute, entre en contact avec l'élément de transmission de force (35) au milieu du mouvement de marche avant, puis appuie sur l'élément de transmission de force (35) afin de faire dépasser le produit de moulage,
dans laquelle la première section comprend une partie ou une intégralité d'une section dans laquelle l'élément mobile (53) est éloigné de l'élément de transmission de force (35),
dans laquelle la seconde section comprend une partie ou une intégralité d'une section dans laquelle l'élément mobile (53) entre en contact avec l'élément de transmission de force (35),
et
dans laquelle la valeur limite supérieure de la première section est supérieure à la valeur limite supérieure de la seconde section.
